# EUROPEAN PATENT SPECIFICATION

(11) **EP 4 357 949 B1**
(45) Date of publication and mention of the grant of the patent: **26.08.2026**
(21) Application number: 22831624.6
(22) Date of filing: 06.06.2022
(51) Int. Cl.: G06F 21/62, G06F 21/60

(54) **AUTHENTICATION METHOD AND APPARATUS**
AUTHENTIFIZIERUNGSVERFAHREN UND -VORRICHTUNG
PROCÉDÉ ET APPAREIL D'AUTHENTIFICATION

(30) Priority: 30.06.2021 CN 202110743679
(43) Date of publication of application: 24.04.2024
(73) Proprietor: Huawei Technologies Co., Ltd., Shenzhen, Guangdong 518129 (CN)
(72) Inventor: WANG, Yu, Shenzhen, Guangdong 518129 (CN); CHEN, Wandong, Shenzhen, Guangdong 518129 (CN); ZHANG, Peng, Shenzhen, Guangdong 518129 (CN)
(74) Representative: Gill Jennings & Every LLP
(86) International application number: PCT/CN2022/097153
(87) International publication number: WO 2023/273803

(56) References cited:
- EP-B1- 1 058 873
- CN-A- 103 905 454
- CN-A- 106 357 609
- US-A1- 2002 112 045
- US-A1- 2018 302 399
- US-A1- 2019 089 694

## Description

### TECHNICAL FIELD

This application relates to the field of storage technologies, and specifically, to an authentication method and apparatus.

### BACKGROUND

In a storage system, different protocols can be provided for users to process various services. The protocols include, for example, an object protocol, a file protocol, and a big data protocol. In the different protocols, accounts of different types usually need to be created for service processing complying with the different protocols. For example, an object account needs to be created in the object protocol, and a Unix account needs to be created in the file protocol. In a related technology, during service processing, each protocol independently authenticates an account complying with the protocol, that is, authenticates whether the account has access permission. In this case, a module configured to authenticate an account in the storage system is relatively complex, and occupies a relatively large quantity of system resources.

EP 1 085 873 B1 relates to file access control in a multi-protocol file server. US2018302399A1 describes a system and a method implementing protocol-level mapping.

### SUMMARY

The invention is defined by the appended claims. Embodiments not falling within the scope of the claims are for illustration. Embodiments of this application are intended to provide an authentication solution. An account complying with a non-target protocol is mapped to an account complying with a target protocol for unified permission authentication, so that an account authentication module in a storage system is simplified, and storage resources are saved.

To achieve the foregoing objective, a first aspect of this application provides an authentication method performed by a storage system. The method includes: receiving a service request sent by a host, where the service request includes a first account, and the first account is an account complying with a first protocol; determining a second account corresponding to the first account, where the second account is an account complying with a target protocol; and authenticating the second account; wherein the authenticating the second account comprises: obtaining authorized account information of an access object of the service request, wherein the authorized account information indicates an authorized account that has permission to access the access object, and the authorized account is an account complying with the target protocol; and authenticating the second account based on the authorized account information of the access object; wherein the method further comprises: creating the first account in response to a creation request sent by the host; creating or determining the second account that has same access permission as the first account; and when the first account is created recording a mapping relationship between the first account and the second account.

An account complying with a non-target protocol is mapped to an account complying with the target protocol, and an authentication module complying with the target protocol may be used for unified authentication, thereby simplifying an account authentication module in a storage system and saving storage resources.

In this embodiment of this application, when the service request is a read request, the access object is to-be-read data; or when the service request is a write request, the access object is storage space (for example, a folder) for written data. When the access object is a folder, the authorized account information of the access object may be an account that can write data into the folder and information about permission of the account. In another example, when the access object is data, the authorized account information of the access object may be an account that can read the data and information about permission of the account.

By mapping the account complying with the non-target protocol to the account complying with the target protocol, the authorized account information of the access object only needs to include authorized account information complying with the target protocol, and the authorized account information only needs to include the authorized account complying with the target protocol, so that the storage resources are further saved.

When the account complying with the non-target protocol is created, a target protocol account mapped to the account is recorded, so that the target protocol account corresponding to the account can be conveniently obtained when the account is authenticated.

In a possible implementation of the first aspect, the creation request includes permission information of the first account, and in a case of creating the second account, the method further includes: setting permission information of the second account based on the permission information of the first account, where the permission information of the second account indicates access permission for data written by using the second account. For example, when an account A is created, the creation request carries one piece of permission information to indicate that data written by using the account A can be read and written only through the account A.

The permission information of the second account is set based on information about the first account. When data is written through the first account, after the authentication of the second account succeeds, the permission information of the second account may be directly used to set authorized account information of the data, so that the authorized account information includes only an account complying with the target protocol, thereby improving data writing efficiency.

In a possible implementation of the first aspect, before the determining a second account corresponding to the first account, the method further includes: determining, based on a format of the first account, that the first account is the account complying with the first protocol.

In a possible implementation of the first aspect, before the determining a second account corresponding to the first account, the method further includes: determining, based on a format of an interface invoked by the service request, that the first account is the account complying with the first protocol.

In a possible implementation of the first aspect, the service request is a write request, the access object is storage space, and the authenticating the second account based on the authorized account information specifically includes: when first authorized account information of the storage space includes the second account, successfully authenticating the second account, and writing data included in the write request into the storage space.

In a possible implementation of the first aspect, the method further includes: setting second authorized account information for the data based on the permission information of the second account.

In a possible implementation of the first aspect, the service request is a read request, the access object is the data, and the authenticating the second account based on the authorized account information specifically includes: when the second authorized account information includes the second account, successfully authenticating the second account, and reading the data and sending the data to the host.

A second aspect of this application provides an authentication apparatus according to claim 7.

### BRIEF DESCRIPTION OF DRAWINGS

Embodiments of this application are described with reference to the accompanying drawings, so that embodiments of this application may be clearer.
FIG. 1A is an architectural diagram of a centralized storage system with a disk-controller separation structure to which embodiments of this application are applied;
FIG. 1B is an architectural diagram of a centralized storage system with a disk-controller integrated structure to which embodiments of this application are applied;
FIG. 1C is an architectural diagram of a distributed storage system to which embodiments of this application are applied;
FIG. 2 is a flowchart of an account creation method according to an embodiment of this application;
FIG. 3 is a flowchart of a data writing method according to an embodiment of this application;
FIG. 4 is a schematic diagram of a process of authenticating an account complying with a non-target protocol according to an embodiment of this application;
FIG. 5 is a flowchart of a data reading method according to an embodiment of this application; and
FIG. 6 is an architectural diagram of an authentication apparatus according to an embodiment of this application.

### DESCRIPTION OF EMBODIMENTS

The following describes technical solutions in embodiments of this application with reference to the accompanying drawings.

An account authentication solution provided in embodiments of this application may be applied to a storage system. The storage system includes a centralized storage system and a distributed storage system. The centralized storage system refers to a central node formed by one or more main devices, data is stored in the central node in a centralized manner, and all data processing services of the entire system are deployed on the central node in a centralized manner. The distributed storage system refers to a system in which data is stored on a plurality of independent storage nodes in a distributed manner. Users can use applications to access data on the storage nodes. A computer running these applications is referred to as an "application server". The application server may be a physical machine or may be a virtual machine. A physical application server includes but is not limited to a desktop computer, a server, a notebook computer, and a mobile device. The application server can access the storage nodes through a fibre channel switch to access data. The switch is only an optional device, and the application server may also directly communicate with the storage nodes by using a network.

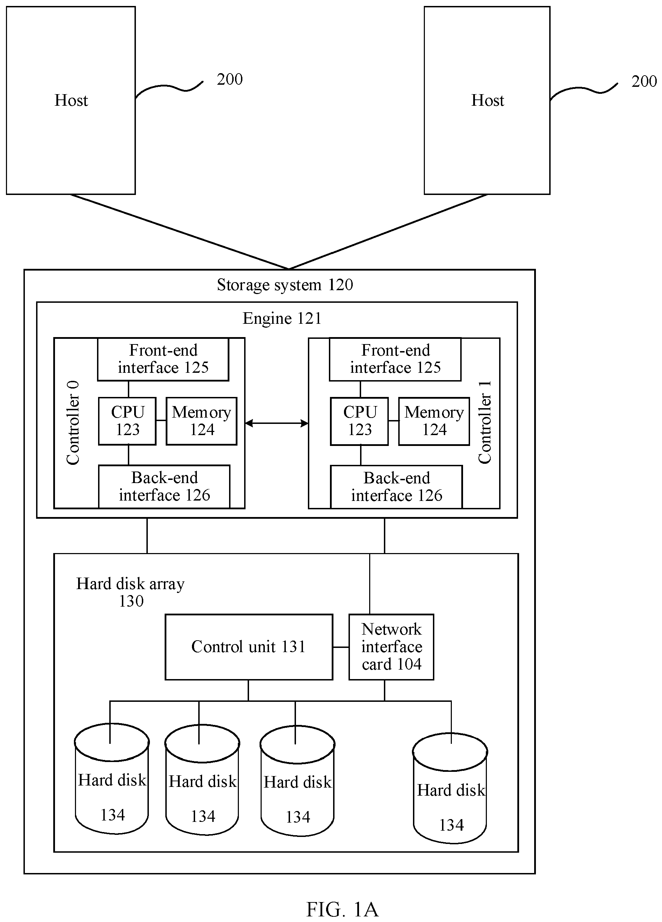

FIG. 1A is an architectural diagram of a centralized storage system 120 with a disk-controller separation structure to which embodiments of this application are applied. The storage system 120 is connected to a plurality of hosts 200. The plurality of hosts 200 are, for example, application servers, and are all connected to the storage system 120 to access data in the storage system 120. It may be understood that the host 200 is not limited to an application server, for example, may alternatively be a user terminal. A feature of the centralized storage system shown in FIG. 1A is that the centralized storage system has a unified portal, and all data from the host 200 needs to pass through the portal. The portal is, for example, an engine 121 in the storage system 120.

As shown in FIG. 1A, the engine 121 has one or more controllers. In FIG. 1A, an example in which the engine includes two controllers is used for description. There is a mirror channel between a controller 0 and a controller 1. Therefore, after the controller 0 writes a piece of data into a memory 124 of the controller 0, the controller 0 may send a copy of the data to the controller 1 through the mirror channel, and the controller 1 stores the copy in a local memory 124 of the controller 1. Therefore, the controller 0 and the controller 1 back up each other. When the controller 0 is faulty, the controller 1 may take over a service of the controller 0; and when the controller 1 is faulty, the controller 0 may take over a service of the controller 1, thereby avoiding unavailability of the entire storage system 120 caused by a hardware fault. When four controllers are deployed in the engine 121, a mirror channel exists between any two controllers, and therefore the any two controllers back up each other.

The engine 121 further includes a front-end interface 125 and a back-end interface 126. The front-end interface 125 is configured to communicate with an application server, to provide a storage service for the application server. The back-end interface 126 is configured to communicate with a hard disk 134, to expand a capacity of the storage system. By using the back-end interface 126, the engine 121 may be connected to more hard disks 134, to form a very large storage resource pool.

In terms of hardware, as shown in FIG. 1A, the controller 0 includes at least a processor 123 and a memory 124. The processor 123 is a central processing unit (central processing unit, CPU), and is configured to process a data access request from the outside of the storage system (a server or another storage system), and is also configured to process a request generated inside the storage system. For example, when receiving, by using a front-end interface, data write requests sent by the server, the processor 123 temporarily stores data in the data write requests in the memory 124. When a total amount of data in the memory 124 reaches a specific threshold, the processor 123 sends, by using a back-end interface 126, the data stored in the memory 124 to the hard disk 134 for persistent storage.

The memory 124 refers to an internal memory that directly exchanges data with the processor 123. The memory 124 can read/write data at any time, has a high speed and is used as a temporary data memory of an operating system or another running program. The memory 124 includes at least two types of memories. For example, the memory may be a random access memory, or may be a read-only memory (read-only Memory, ROM). For example, the random access memory is a dynamic random access memory (dynamic random access memory, DRAM) or a storage class memory (storage class memory, SCM). The DRAM is a semiconductor memory, which is a volatile memory (volatile memory) device like most random access memories (random access memories, RAMs). The SCM is a composite storage technology that combines features of both a conventional storage apparatus and a memory. The storage class memory can provide a faster read/write speed than the hard disk, but has a slower computing speed than the DRAM and is cheaper than the DRAM in terms of costs. However, the DRAM and the SCM are merely examples for description in this embodiment, and the memory may further include another random access memory, for example, a static random access memory (static random access memory, SRAM). The read-only memory, for example, may be a programmable read-only memory (programmable read-only memory, PROM), an erasable programmable read-only memory (erasable programmable read-only memory, EPROM), or the like. In addition, the memory 124 may alternatively be a two-wire memory module or a dual in-line memory module (dual in-line memory module, DIMM for short), that is, a module formed by the dynamic random access memory (DRAM), or may be a solid state-disk (solid-state disk, SSD). In an actual application, a plurality of memories 124 and memories 124 of different types may be configured in the controller 0. A quantity and types of the memories 124 are not limited in this embodiment. In addition, the memory 124 may be configured, to have a power-off protection function. The power-off protection function means that when a system is powered off and then powered on again, data stored in the memory 124 is not lost. A memory with a power protection function is referred to as a non-volatile memory.

The memory 124 stores a software program, and the processor 123 may manage the hard disk by running the software program in the memory 124. The management on the hard disk is, for example, abstracting the hard disk into a storage resource pool, and then dividing the hard disk into LUNs for use by the server. The LUN is actually the hard disk seen on the server. Certainly, some centralized storage systems are also file servers and can provide file sharing services for the servers.

Hardware components and software structures of the controller 1 (and other controllers that are not shown in FIG. 1A) are similar to those of the controller 0, and details are not described herein again.

In the storage system in which disks and controllers are separated shown in FIG. 1A, the engine 121 may not have a disk slot, the hard disk 134 needs to be placed in a hard disk array 130, and the back-end interface 126 communicates with the hard disk array 130. The back-end interface 126 exists in the engine 121 in a form of an adapter card, and two or more back-end interfaces 126 may be simultaneously used on one engine 121 to connect to a plurality of disk arrays. Alternatively, the adapter card may alternatively be integrated on a mainboard, and in this case, the adapter card may communicate with the processor 123 by using a PCIE bus.

It is to be noted that, FIG. 1A shows only one engine 121. However, in an actual application, the storage system may include two or more engines 121, and redundancy or load balancing is performed between the plurality of engines 121.

The hard disk array 130 includes a control unit 131 and several hard disks 134. The control unit 131 may have a plurality of forms. In one case, the hard disk array 130 belongs to a smart disk enclosure. As shown in FIG. 1A, the control unit 131 includes a CPU and a memory. The CPU is configured to perform operations such as address translation and data reading/writing. The memory is configured to temporarily store data that is to be written into the hard disk 134, or read, from the hard disk 134, data that is to be sent to the controller. In another case, the control unit 131 is a programmable electronic component, for example, a data processing unit (data processing unit, DPU). The DPU is universal and programmable as the CPU, but is more dedicated. It can run efficiently on a network data packet, a storage request, or an analysis request. The DPU is distinguished from the CPU by relatively high parallelism (needing to process a large number of requests). Optionally, the DPU herein may alternatively be replaced with a processing chip such as a graphics processing unit (graphics processing unit, GPU) or an embedded neural-network processing unit (neural-network processing unit, NPU). Generally, there may be one control unit, or may be two or more control units 131. When the hard disk array 130 includes at least two control units 131, there is a belonging relationship between the hard disk 134 and the control units 131, and each control unit can only access a hard disk belonging to the control unit. Therefore, this usually involves forwarding a data read/write request between the control units 131, resulting in a relatively long data access path. In addition, if storage space is not enough, when a new hard disk 134 is added to the hard disk array 130, the belonging relationship between the hard disk 134 and the control units 131 needs to be rebound, and an operation is complex, resulting in poor scalability of the storage space. Therefore, in another implementation, a function of the control unit 131 may be offloaded to a network adapter 104. In other words, in this implementation, the hard disk array 130 does not have the control unit 131, but the network adapter 104 completes data reading/writing, address translation, and other calculation functions. In this case, the network adapter 104 is an intelligent network interface card. It may include a CPU and a memory. The CPU is configured to perform operations such as address translation and data reading/writing. The memory is configured to temporarily store data that is to be written into the hard disk 134, or read, from the hard disk 134, data that is to be sent to the controller. The network adapter 104 may alternatively be a programmable electronic component, for example, a data processing unit (data processing unit, DPU). The DPU is universal and programmable as the CPU, but is more dedicated. It can run efficiently on a network data packet, a storage request, or an analysis request. The DPU is distinguished from the CPU by relatively high parallelism (needing to process a large number of requests). Optionally, the DPU herein may alternatively be replaced with a processing chip such as a graphics processing unit (graphics processing unit, GPU) or an embedded neural-network processing unit (neural-network processing unit, NPU). There is no belonging relationship between the network adapter 104 and the hard disk 134 in the hard disk array 130, and the network adapter 104 may access any hard disk 134 in the hard disk array 130. Therefore, it is relatively convenient to expand a hard disk when the storage space is not enough.

According to a type of a communication protocol between the engine 121 and the hard disk array 130, the hard disk array 130 may be a SAS disk array, an NVMe disk array, or a disk array of another type. The SAS disk array uses a SAS3.0 protocol. Each enclosure supports 25 SAS disks. The engine 121 is connected to the hard disk array 130 by using an onboard SAS interface or a SAS interface module. The NVMe disk array is more like a complete computer system. NVMe disks are inserted into the NVMe disk array. The NVMe disk array is connected to the engine 121 by using an RDMA port.

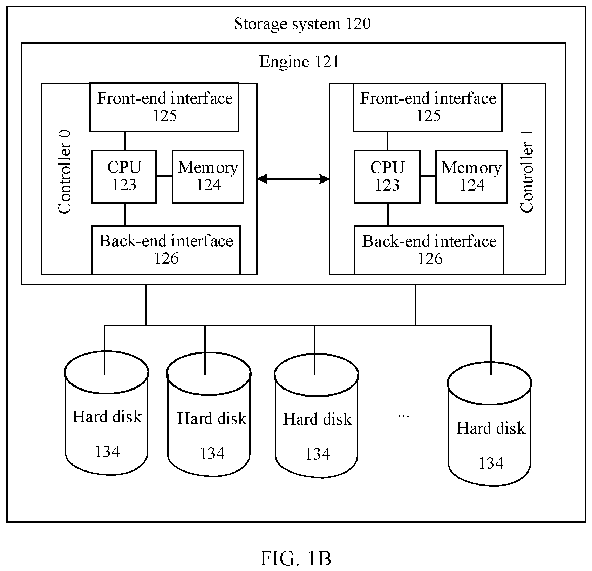

It may be understood that, although FIG. 1A shows a centralized storage system with a disk-controller separation structure, the centralized storage system is not intended to limit an application scope of embodiments of this application. For example, embodiments of this application may be further applied to a centralized storage system with a disk-controller integrated structure shown in FIG. 1B. In the centralized storage system with the disk-controller integrated structure, a difference from the disk-controller separation structure lies in that the engine 121 has a disk slot, the hard disk 134 may be directly deployed in the engine 121, and the back-end interface 126 is optional configuration. When the storage space of the system is not enough, more hard disks or hard disk arrays may be connected by using the back-end interface 126.

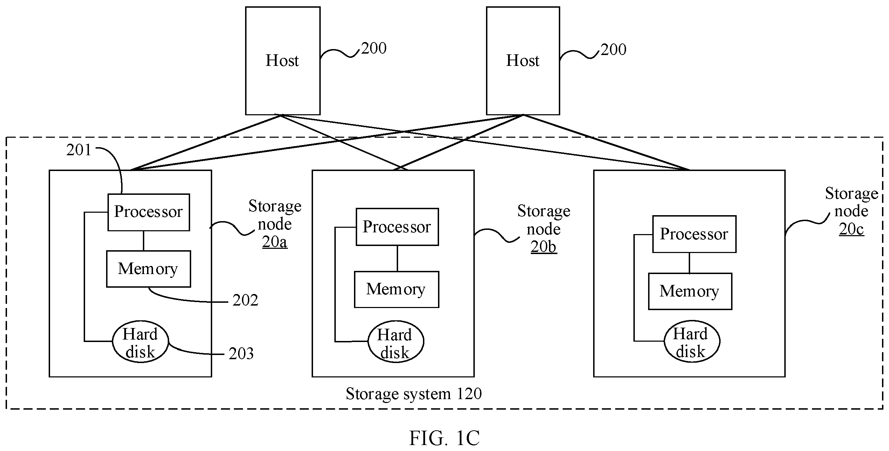

Embodiments of this application may be further applied to a distributed storage system 120 shown in FIG. 1C. The distributed storage system 120 includes a storage node cluster. The storage node cluster includes one or more storage nodes 20 (FIG. 1C shows three storage nodes 20a, 20b, and 20C, but is not limited to three storage nodes), and the storage nodes 20 may be interconnected. Each storage node 20 is connected to a plurality of hosts 200. Each host 200 is connected to a plurality of storage nodes 20, and interacts with the plurality of storage nodes 20, to distribute and store data in the plurality of storage nodes 20, thereby implementing reliable data storage. Each storage node 20 includes at least a processor 201, a memory 202, and a hard disk 203. Structures and functions of the processor 201, the memory 202, and the hard disk 203 are the same as those of the processor 123, the memory 124, and the hard disk 134 in FIG. 1A. For details, refer to related descriptions in FIG. 1A. Details are not described herein again.

In the storage system, a plurality of protocols can be provided for users to process services in different scenarios. The plurality of protocols include, for example, an object protocol, a file protocol, a big data protocol, and a server message block (server message block, SMB) protocol. The object protocol is applicable to processing such as data backup and archiving in an Internet scenario, the file protocol is applicable to a high-performance computing scenario, and the big data protocol is applicable to a statistics analysis scenario. In different scenarios, service models complying with different protocols may be constructed based on service processing requirements, and the service models may be in a form of a code module. The service model provides a plurality of interfaces for the users to implement different service operations, for example, a write interface, a read interface, and the like. The service model may use a protocol corresponding to a processing scenario, so that the plurality of interfaces of the model are interfaces based on a corresponding protocol.

Different protocols usually use different account types to request service processing. For example, an object account needs to be created in the object protocol, a Unix account needs to be created in the file protocol, and a Windows account needs to be created in the SMB protocol. In a related technology, a plurality of protocols converges and interworks, and accounts complying with different protocols can access a same piece of data. However, different protocols use independent authentication modules (or models) to authenticate the accounts complying with different protocols. The authentication modules may be a segment of code used to implement an authentication function, and the service models using different protocols may reference code of the authentication modules to implement an authentication function of the models. For example, it is assumed that both an object account User1 and a Unix account nfs1 have read/write permission on stored data (for example, an object obj1). When a user performs a write operation on the object obj1 by using the account User1, the account User1 is authenticated by using an authentication module complying with the object protocol in the storage system, that is, it is determined, based on authorized account information of the object obj1 complying with the object protocol, whether the account User1 is included in an account of the object obj1 complying with the object protocol that is authorized to write. When the user performs a write operation on the object obj1 by using the account nfs1, the account nfs1 is authenticated by using an authentication module complying with a Unix protocol in the storage system, that is, it is determined, based on authorized account information of the object obj1 complying with the Unix protocol, whether the account nfs1 is included in an account of the object obj1 complying with the file protocol that is authorized to write.

In addition, the object protocol and the file protocol may use different forms to record the authorized account information of the stored data. Specifically, in a form, the authorized account information of the stored data includes an identifier of a write account of the data, an identifier of a group to which the write account belongs, and permission information. The permission information, for example, has a predetermined quantity of fields, and a plurality of values of each field correspond to permission of an account in a predetermined range. For example, the permission information may include three fields, where the first field represents permission of an account where the data is written, the second field represents permission of an account in a group to which the account where the data is written belongs, and the third field represents permission of another account. In addition, different values of each field indicate different permission, for example, 3 represents read permission, 4 represents write permission, and 5 represents read and write permission. In another form, an access control list (access control list, ACL) of the stored data may be recorded, and identifiers of authorized accounts corresponding to permission of the data are recorded in the ACL.

In the foregoing related technology, because different authentication modules are used to perform account authentication on accounts complying with different protocols, the authentication modules complying with different protocols need to include code for performing account authentication. For example, the code is used to read authorized account information of an access object of a service request, and determine, based on the authorized account information, whether a to-be-authenticated account is an authorized account. When the service request is a write request, an access object of the write request is storage space, corresponding to the write request, into which data is to be written, and the storage space is, for example, storage space corresponding to a folder into which data is to be written. When the service request is a read request, an access object of the read request is to-be-read data corresponding to the read request. Therefore, different authentication modules complying with different protocols are actually used to implement a same function, and a plenty of repeated code exists, occupying a relatively large quantity of storage resources.

In addition, to cooperate with authentication operations by different authentication modules, authorized account information of each protocol needs to be recorded for a same piece of data. For example, for the object obj1, especially when the object protocol and the file protocol record the authorized account information in different forms, authorized account information corresponding to the object protocol and authorized account information corresponding to the file protocol need to be separately recorded. In this way, the authentication module complying with the object protocol may determine, based on the authorized account information complying with the object protocol, whether an account (for example, User1) complying with the object protocol has permission to access the object obj1, and an authentication module complying with the file protocol may determine, based on the authorized account information complying with the file protocol, whether an account (for example, nfs1) complying with the file protocol has permission to access the object obj 1. Authorized account information that is of the same piece of data and that corresponds to a plurality of protocols causes a large amount of duplicate data, and occupies storage resources of the storage system.

In addition, accounts complying with different protocols often correspond to a same user and have same storage access permission. For example, the account User1 and the account nfs1 may have same storage access permission. However, compared with the object obj1, both a account User1 and the account nfs1 need to be recorded, which causes a large amount of redundant data and occupies storage resources of the storage system.

Embodiments of this application provide a user authentication method. An account complying with a non-target protocol is mapped to an account complying with a target protocol, so that an authentication module complying with the target protocol can be used to perform unified user authentication on accounts complying with the non-target protocol. This simplifies an account authentication module in a storage system. Only one piece of authorized account information needs to be recorded for one piece of data, and only one account needs to be recorded in authorized account information for accounts complying with different protocols that have same storage access permission, thereby saving storage resources of the storage system. The target protocol may be determined in advance in the storage system, and an account authentication module corresponding to the target protocol is set, to perform account authentication on accounts complying with the target protocol and accounts complying with another non-target protocol in a unified manner. The method may be performed by the storage system 120 shown in FIG. 1A, the storage system 120 shown in FIG. 1B, or the storage system 120 shown in FIG. 1C. The following uses the storage system 120 in FIG. 1A as an example for description.

Before introducing specific processes and methods, some terms are described first.

Access object: In this embodiment of this application, when the service request is a read request, the access object is data; or when the service request is a write request, the access object is storage space (for example, a folder).

Permission information: It indicates permission owned by an account. For example, when an account A is created, a creation request carries one piece of permission information to indicate that data written by using the account A can be read/written only by the account A. In another example, one piece of permission information is set for the account B and indicates that data written by using the account B can be read/written only by the account B.

Authorized account information: It indicates information about an account that is allowed to perform an access operation on an access object. For example, when the access object is a folder, the authorized account information of the access object may be an account that can write data into the folder and information about permission of the account. In another example, when the access object is data, the authorized account information of the access object may be an account that can read the data and information about permission of the account.

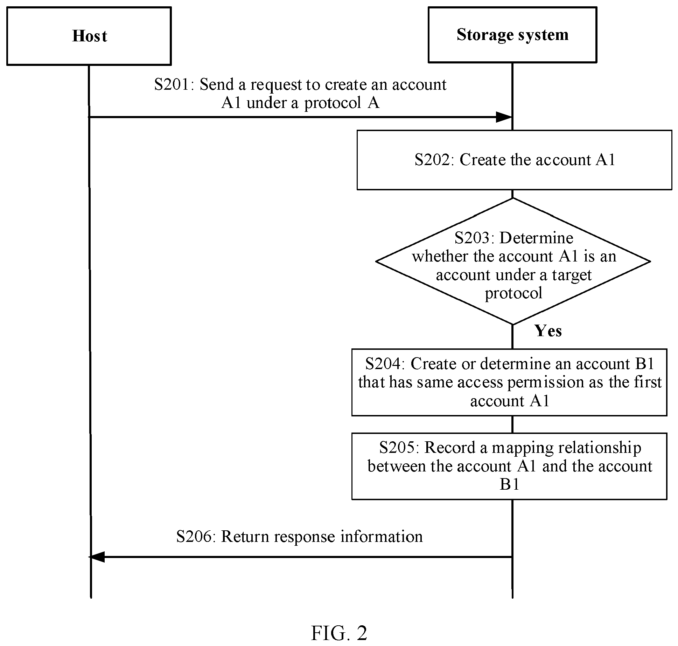

FIG. 2 is a flowchart of an account creation method according to an embodiment of this application. The method may be executed by a host and a storage system.

As shown in FIG. 2, in step S201, a host sends, to a storage system, a request for creating an account A1 complying with a protocol A.

As described above, the storage system 120 may provide a plurality of service models based on different protocols for a user. The plurality of service models may be stored in the hard disk 134 of the storage system 120. For example, the controller 0 in the storage system 120 runs the service models. Before running any service model, a CPU 123 in the controller 0 may read, from the hard disk 134, a code module corresponding to the service model, and store the code module in the memory 124 of the controller 0, so that the CPU 123 can run a service model stored in the memory 124.

When the user is to use a service model of a protocol (for example, the protocol A) in the storage system, the user first needs to create an account complying with the protocol A, where the protocol A may be, for example, any one of the foregoing protocols. In this way, the user may send, to the storage system by using the host, the request for creating the account A1 complying with the protocol A, where the request specifies an identifier of the account A1 to be created.

The creation request may further include information about a group to which the account A1 belongs. The group to which the account A1 belongs is an account group complying with the protocol A, and accounts in the account group have a specific common attribute. For example, users corresponding to a plurality of accounts in the account group are members of a same entity organization. In addition, the request for creating an account may further include permission information. The permission information is, for example, used to indicate authorized account information of data written by using the account A1. For example, based on the foregoing forms of recording the authorized account information, the permission information may be, for example, "550", where "5" in the first field (that is, on the leftmost side) indicates that the account A1 has read/write permission on the data written by using the account A1, "5" in the second field indicates that all accounts in the group to which the account A1 belongs have read/write permission on the data written by using the account A1, and "0" in the third field indicates that other accounts other than the accounts in the group have no read/write permission on the data written by using the account A1. It may be understood that, when the user does not specify permission information, default permission information may be set for an account in the storage system 120. In some protocols, the request for creating an account may further include password information of the account A1 to be created, and the like.

The request for creating an account may include an interface (that is, a callable function) that is provided by a service model M_{A} based on the protocol A and that is used to create an account complying with the protocol A, to call the interface. The interface has a predetermined format specified in the protocol A, and the interface may include information such as the identifier, permission information, password information, and group information of the account as input parameters.

In step S202, the storage system creates the account A1 based on the creation request.

After the storage system receives the request for creating the account A1, the CPU 123 may execute (that is, call) an account creation interface included in the request, to create the account A1 complying with the protocol A based on specific code of the interface. Specifically, the CPU 123 may add the account A1 to an account set complying with the protocol A, and set other information of the account A1 based on the request, for example, the password information, the group information, and the like.

In step S203, the storage system determines whether the account A1 is an account complying with a non-target protocol.

Specifically, in an implementation, the CPU 123 may determine, based on a type of the interface called by the creation request, that the account A1 is an account complying with the protocol A. In another implementation, accounts complying with different protocols A have different account formats, and the CPU 123 may determine, based on a format of the account A1, that the account A1 is an account complying with the protocol A. In this embodiment of this application, one protocol (for example, a protocol B) may be specified in the plurality of protocols in the storage system as the target protocol, and the target protocol may be determined based on factors such as a service scenario, an operating environment, and a to-be-processed data format in the storage system. For example, when a large amount of file data is processed in the storage system, a file protocol may be set as the target protocol. It is assumed that the protocol B is set as the target protocol in the storage system 120. When determining that the account A1 is an account complying with the protocol A, the CPU 123 may determine that the account A1 is an account complying with the non-target protocol.

After it is determined that the account A1 is the account complying with the non-target protocol, because in this embodiment of this application, an account complying with the target protocol that is mapped to the account complying with the non-target protocol is used for authentication, when it is determined that the account A1 is the account complying with the non-target protocol, setting permission information for the account A1 may be omitted.

If determining, by using the foregoing process, that the account A1 is an account complying with the protocol B, the CPU 123 may determine that the account A1 is an account complying with the target protocol. In this case, permission information needs to be set for the account A1. Specifically, when the creation request includes permission information, the permission information of the account A1 is set based on the permission information included in the creation request; or when the creation request does not include permission information, the permission information of the account A1 may be set based on default permission information.

In step S204, when it is determined that the account A1 is an account complying with the non-target protocol, the storage system creates or determines an account B1 that has same access permission as the account A1, where the account B1 is an account complying with the protocol B.

In the storage system, access permission of an account may be obtained based on authorized account information corresponding to each piece of data in the storage system. In a multi-protocol convergence and interworking scenario, accounts complying with different protocols may have same access permission on a same piece of data, for example, read/write permission. Based on the multi-protocol convergence and interworking scenario, the account B1 complying with the protocol B that has the same access permission as the account A1 may be determined as a target protocol account mapped to the account A1. Specifically, assuming that the account A1 and the account B1 have same access permission for one or more same pieces of data in the storage system, it may be determined that the account A1 and the account B1 have same storage access permission. Alternatively, assuming that the account A1 and the account B1 are authorized accounts having same access permission for one or more same pieces of data in the storage system, it may be determined that the account A1 and the account B1 have same storage access permission.

In an implementation, currently, in the storage system 120, there is no account that complies with the protocol B and that has same storage access permission as the account A1. For example, it is assumed that permission information included in the request for creating the account A1 indicates that only the account A1 is allowed to read/write data written by using the account A1. In this case, in the storage system, an authorized account for the data written by using the account A1 is only the account A1. Therefore, currently, there is no account that has the same access permission as the account A1. In this case, an account B1 that complies with a protocol B and that corresponds to the account A1 may be newly created, so that the account B1 and the account A1 have the same storage access permission.

Specifically, the CPU 123 may generate the account B1 corresponding to the account A1. Then, the CPU 123 adds the account B1 to an account set complying with the protocol B, and sets permission information of the account B1 in data of the account B1. The storage system may set the permission information of the account B1 based on the permission information of the account A1 in the creation request and a permission setting rule in the protocol B, so that the permission information of the account B1 and the permission information of the account A1 indicate same access permission, and the permission information of the account B1 indicates access permission of an account complying with the protocol B. For example, assuming that the permission information included in the creation request is that only the account A1 is allowed to read/write data written by using the account A1, the permission information of the account B1 may be correspondingly set to 500. As described above, each bit in this value represents a field, where the first field corresponds to the account B1, and 5 indicates that the account B1 has read/write permission on data written by using the account B1; the second field corresponds to a group to which the account B1 belongs, and 0 indicates that other accounts in the group to which account B1 belongs do not have the read/write permission on the data written by using the account B1; and the third field corresponds to another accounts, and 0 indicates that the another account does not have the read/write permission on the data written by using the account B1. The setting of the permission information of the account B1 indicates that only the account B1 is allowed to read/write the data written by using the account B1, and the account B1 corresponds to the account A1. Therefore, it indicates that only the account A1 is allowed to read/write the data written by using the account A1.

In another implementation, the account set complying with the protocol B in the storage system already includes the account B1 that has the same storage access permission as the account A1. For example, an account A1 belongs to an account group M complying with the protocol A, and permission information of each account in the group M is set to 550 when the account is created. In other words, write data of each account in the group M is allowed to be read/written by each account in the group M. Therefore, the accounts in the group M have same storage access permission. In this case, it is assumed that the group M further includes an account A2. When creating A2, the CPU 123 has pre-created an account B1 that complies with the protocol B and that is mapped to the account A2, that is, the account A2 and the account B1 have same storage access permission. Therefore, it can be easily determined that the account B1 and the account A1 have same storage access permission.

In another implementation, the user may send, to the storage system 120 by using the host 200, a request (not shown in FIG. 2) for creating or specifying an account B1 that complies with the protocol B and that has same access permission as the account A1. In this case, the host 200 triggers the storage system 120 to perform step S204, and the storage system 120 does not need to perform step S203 to trigger execution of step S204. In other words, step S203 is an optional step.

In step S205, the storage system records a mapping relationship between the account A1 and the account B1.

Specifically, the CPU 123 may record, in data of the account A1 complying with the protocol A, that an account that complies with the target protocol and to which the account A1 is mapped is the account B1.

In step S206, the storage system returns response information to the host.

The response information indicates that the account A1 is successfully created. When the user shown in FIG. 2 does not send, by using the host, the request for creating or specifying the account B1 corresponding to the account A1, the storage system 120 may further return an identifier of the account B1 to the user, so that the user may use the account B1 to perform service processing complying with the protocol B.

After the process of creating the account A1 is performed, the account A1 is created, and the account B1 that complies with the target protocol and that corresponds to the account A1 is determined. The user may perform any service processing in the service model M_{A} by using the account A1. When the account A1 needs to be authenticated in a service processing process, the account B1 may be authenticated by using a unified authentication process in the protocol B, and a result of the authentication may be used as an authentication result of the account A1. The following uses a data write/read process as an example to describe an authentication process in a service processing process provided in embodiments of this application.

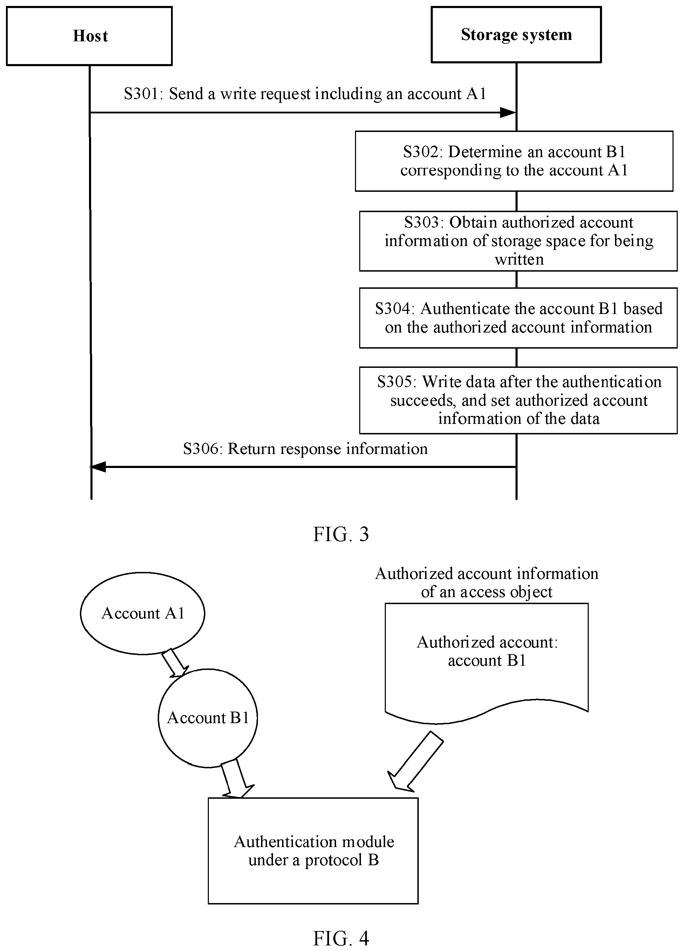

FIG. 3 is a flowchart of a data writing method according to an embodiment of this application. The method is performed by a host and a storage system.

As shown in FIG. 3, first, in step S301, a host sends a write request including an account A1 to a storage system, where the write request includes to-be-written data and storage space for being written into the data, and the storage space is, for example, storage space corresponding to a folder.

Specifically, the write request sent by the host 200 may include a write interface complying with a protocol A to call the write interface. The to-be-written data, the storage space for being written, and the like that are included in the write request may be input parameters of the write interface. An account A1 in the write request indicates that the write request is sent by a user corresponding to the account A1. After the storage system 120 receives the write request, similar to the foregoing description, the CPU 123 may determine, based on a format of the interface or a format of the account A1 included in the write request, that the account A1 is an account complying with the protocol A, that is, not an account complying with a target protocol. When it is determined that the account A1 is an account complying with a non-target protocol, step S302 is performed.

In step S302, the storage system determines an account B1 corresponding to the account A1.

Specifically, the storage system may determine, based on a pre-recorded mapping relationship between the account A1 and the account B1, that the account A1 corresponds to the account B1.

In step S303, the storage system obtains information about an authorized account of the storage space for being written.

The storage space for being written is generally applied by the user, or is allocated by the storage system by default. The storage space for being written is, for example, storage space corresponding to a folder. Using the folder as an example, when creating the folder, the user specifies an account that is allowed to write and/or read the folder, that is, specifies authorized account information of the folder, including information about an account that is authorized to write. The storage system 120 may record, in the hard disk 134, the authorized account information corresponding to the folder, so that the CPU 123 may read the authorized account information of the folder from the hard disk 134. The CPU 123 may also cache the authorized account information of the folder in the memory during previous access to the folder, so that the CPU 123 may also read the authorized account information of the folder from the memory.

It may be understood that the obtained information about the account that is authorized to write is used for comparison with the account B1, to determine whether the account B1 has write permission. However, in this embodiment of this application, during user authentication, an account complying with the target protocol may be directly authenticated, and an account complying with the non-target protocol is authenticated by using an account that complies with the target protocol and that corresponds to the account.

In step S304, the storage system authenticates the account B1 based on authorized account information of the storage space.

The storage system 120 may authenticate, based on the authorized account information and information about the account B1, whether the account B1 is an account that is authorized to write. If the account B1 is an account that is authorized to write, the authentication on the account B1 succeeds, and data in the write request sent by the host 200 may be written into the storage space. Because the account B1 and the account A1 have same access permission, it may be determined that the account A1 has write permission on the storage space, and the authentication on the account A1 succeeds.

FIG. 4 is a schematic diagram of a process of authenticating an account complying with a non-target protocol according to an embodiment of this application. As shown in FIG. 4, in the storage system 120, for a plurality of protocols, only an authentication module complying with a target protocol (for example, a protocol B) needs to be set, and a corresponding authentication module does not need to be set for each protocol. Service models of different protocols may reference an authentication module complying with the protocol B to perform account authentication. In addition, for an access object (for example, a storage space to be written or to-be-read data) in the storage system, only authorized account information complying with the target protocol needs to be set. In addition, using the storage space to be written as an example, only an identifier of an authorized account (for example, an identifier of an authorized write account or an identifier of an authorized read account) complying with the target protocol needs to be recorded in the authorized account information of the storage space, thereby greatly saving storage resources. When the authentication module in the protocol B authenticates the account A1, the authentication module determines, based on authorized account information of the access object, whether the account B1 corresponding to the account A1 is an authorized account, to determine whether the account A1 is authorized.

In step S305, the storage system writes data after the authentication succeeds, and sets authorized account information of the data based on permission information of the account B1.

When it is determined that the account A1 has write permission, the storage system may write data into the storage space based on the write request. Specifically, the CPU 123 may send a data write request to the hard disk 134, so that the hard disk 134 writes data into specified storage space, to perform persistent storage on the data. After completing the writing, the hard disk 134 returns completion information to the CPU 123.

After the data is written, the CPU 123 may set authorized account information of the written data based on the permission information of the account B1. For example, the permission information of the account B1 is 550, and the permission information indicates that the account B1 is allowed to read/write data written by using the account B1, and an account in a group M to which the account B1 belongs is allowed to read/write the data. Therefore, the CPU 123 may set the following authorized account information for the written data: "account B1", "group M", and "550". "Account B1" indicates an identifier of an account for writing the data, "group M" indicates an identifier of a group to which the account B1 belongs, and "550" indicates that the data is allowed to be read/written by the account for writing the data and another account in the group to which the account belongs, that is, all accounts in the group M are allowed to be read/written. The CPU 123 may send the authorized account information to the hard disk 134, to store the authorized account information in the hard disk 134 in association with the written data. In an implementation, the CPU 123 may send, to the hard disk 134, a request for writing to-be-written data and authorized account information of the to-be-written data, to write the to-be-written data and the authorized account information of the to-be-written data into consecutive addresses.

In step S306, after writing the data and setting the authorized account information of the data, the storage system returns response information to the host, to indicate that the data is successfully written.

It can be learned from the foregoing writing process that, in this embodiment of this application, for a write request of an account complying with the non-target protocol, authentication is performed based on an account that complies with the target protocol and that corresponds to the account, so that a unified authentication module complying with the target protocol and authorized account information complying with the target protocol may be used to authenticate an account of each protocol, thereby saving system resources.

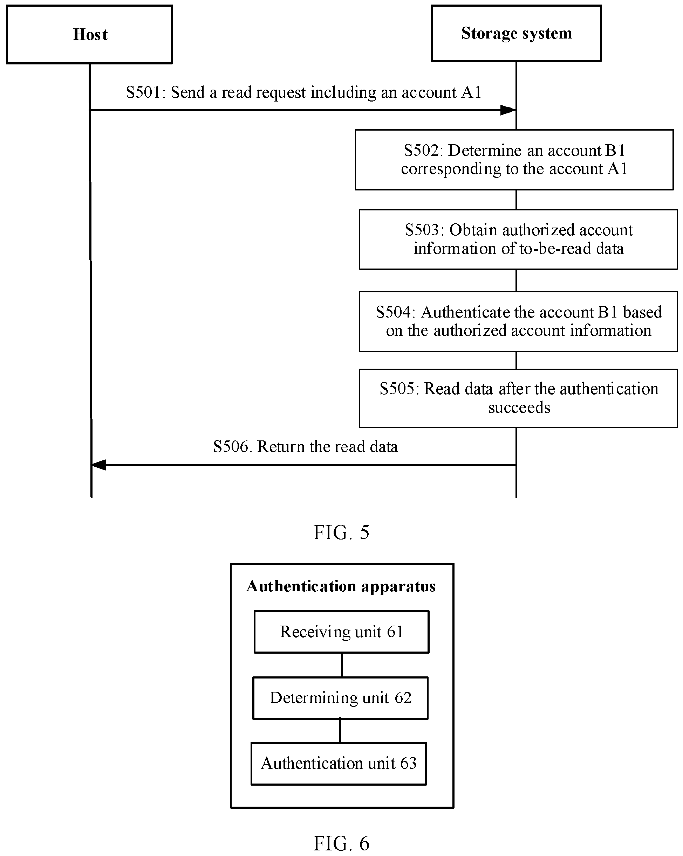

FIG. 5 is a flowchart of a data reading method according to an embodiment of this application. The method is performed by a host and a storage system.

As shown in FIG. 5, in step S501, a host sends a read request including an account A1 to a storage system, where the read request may include address information of to-be-read data.

Specifically, the read request includes a read interface complying with the protocol A to call the read interface, the account A1 and the address information may be input parameters of the read interface, and the account A1 in the read request indicates that the read request is sent by a user corresponding to the account A1. After the storage system 120 receives the read request, the CPU 123 may determine, based on a format of the read interface or a format of the account A1 included in the read request, that the account A1 is an account complying with the protocol A, that is, not an account complying with a target protocol.

In step S502, the storage system determines an account B1 corresponding to the account A1.

For this step, refer to the foregoing description of step S302. Details are not described herein again.

In step S503, the storage system obtains authorized account information of the to-be-read data.

It is assumed that the to-be-read data is data written by using the method shown in FIG. 3. According to the foregoing data writing method process, after writing the data, the CPU 123 records authorized account information of the data, that is, "account B1", "group M", and "550". Therefore, the CPU 123 may read, from the authorized account information of the data recorded in the hard disk 134, information about an account that is authorized to read the data. In some cases, after reading the data, the CPU 123 has cached the data and the corresponding authorized account information in the memory, so that the CPU 123 may read the authorized account information of the data from the memory. Similar to the foregoing description, the authorized account information includes information about an account complying with the target protocol. Specifically, it may be determined, from the authorized account information "account B1", "group M", and "550", that accounts that are authorized to read the data include all accounts in the group M, including the account B1.

In step S504, the storage system authenticates the account B1 based on authorized account information.

Specifically, the CPU 123 may determine, based on the authorized account information of the data, whether the account B1 is in the accounts that are authorized to read the data, and when it is determined that a result is yes, the authentication on the account B1 succeeds. Because the account B1 and the account A1 have same access permission, it may be determined that the account A1 has read permission on the data, and the authentication on the account A1 succeeds.

In step S505, the storage system reads data after the authentication succeeds.

When it is determined that the account A1 has the read permission, the storage system may read data based on the read request. Specifically, the CPU 123 may send a data read request to the hard disk 134, so that the hard disk 134 may read data from a predetermined address and return the data to the CPU 123. When the data is cached in the memory, the CPU 123 may read the data from the memory.

In step S506, after reading the data, the storage system returns the read data to the host.

It can be learned from the foregoing reading process that, in this embodiment of this application, for a read request of an account complying with the non-target protocol, authentication is performed based on an account that complies with the target protocol and that corresponds to the account, so that a unified authentication module complying with the target protocol and authorized account information of data complying with the target protocol may be used to authenticate an account of each protocol, thereby saving system resources.

FIG. 6 is an architectural diagram of an authentication apparatus according to an embodiment of this application. The authentication apparatus is configured to perform the method shown in FIG. 2, FIG. 3, or FIG. 5. The authentication apparatus includes:
a receiving unit 61, configured to receive a service request sent by a host, where the service request includes a first account, and the first account is an account complying with a first protocol;
a determining unit 62, configured to determine a second account corresponding to the first account, where the second account is an account complying with a target protocol; and
an authentication unit 63, configured to authenticate the second account.

In a possible implementation, the authentication unit 63 is specifically configured to: obtain authorized account information of an access object of the service request, where the authorized account information indicates an authorized account that has permission to access the access object, and the authorized account is an account complying with the target protocol; and authenticate the second account based on the authorized account information of the access object.

In a possible implementation, the authentication apparatus further includes:
a first account creation unit, configured to create the first account in response to a creation request sent by the host;
a second account creation or determining unit, configured to create or determine the second account that has same access permission as the first account; and
a recording unit, configured to record a mapping relationship between the first account and the second account.

In a possible implementation, the creation request includes permission information of the first account, and the authentication apparatus further includes: a setting unit, configured to: in a case of creating the second account, set permission information of the second account based on the permission information of the first account, where the permission information of the second account indicates access permission for data written by using the second account.

In a possible implementation, the determining unit 62 is further configured to: before determining the second account corresponding to the first account, determine, based on a format of the first account, that the first account is the account complying with the first protocol.

In a possible implementation, the determining unit 62 is further configured to: before determining the second account corresponding to the first account, determine, based on a format of an interface invoked by the service request, that the first account is the account complying with the first protocol.

In a possible implementation, the service request is a write request, the access object is storage space, and the authentication unit 63 is specifically configured to: when first authorized account information of the storage space includes the second account, successfully authenticate the second account, and write data included in the write request into the storage space.

In a possible implementation, the setting unit is further configured to: set second authorized account information for the data based on the permission information of the second account.

In a possible implementation, the service request is a read request, the access object is the data, and the authentication unit 63 is specifically configured to: when the second authorized account information includes the second account, successfully authenticate the second account, and read the data and send the data to the host.

An embodiment of this application further provides a storage device, including a processor and a memory. The memory stores executable computer program instructions, and the processor executes the executable computer program instructions to implement the method shown in FIG. 2, FIG. 3, or FIG. 5.

An embodiment of this application further provides a computer-readable storage medium, where the computer-readable storage medium stores computer program instructions, and when the computer program instructions are executed on a computer or a processor, the computer or the processor is enabled to perform the method shown in FIG. 2, FIG. 3, or FIG. 5.

An embodiment of this application further provides a computer program product, including computer program instructions. When the computer program instructions are run on a computer or a processor, the computer or the processor is enabled to perform the method shown in FIG. 2, FIG. 3, or FIG. 5.

It is to be understood that descriptions such as "first" and "second" in this specification distinguish similar concepts only for ease of description, and do not have other limitation functions.

A person skilled in the art may clearly understand that, for descriptions of the embodiments provided in this application, reference may be made to each other. For ease and brevity of description, for example, for functions and performed steps of the apparatuses and devices provided in embodiments of this application, refer to related descriptions of the method embodiments of this application, and reference may also be made between the method embodiments and the apparatus embodiments.

A person of ordinary skill in the art may understand that all or some of the steps in the foregoing method embodiments may be implemented by a program instructing relevant hardware. The foregoing program may be stored in a computer-readable storage medium. When the program runs, all or some of the steps of the method embodiments are performed. The foregoing storage medium includes any medium that can store program code, such as a read-only memory (read-only memory, ROM), a random-access memory (random-access memory, RAM), a magnetic disk, or an optical disc.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state disk (solid state-disk, SSD)), or the like.

In the several embodiments provided in this application, it is to be understood that the disclosed apparatus and method may be implemented in other manners without departing from the scope of this application. For example, the described embodiments are merely examples. For example, division into the modules or units is merely logical function division, and may be other division in an actual implementation. For example, a plurality of units or components may be combined or may be integrated into another system, or some features may be ignored or not be performed. The units described as separate parts may be or may not be physically separate, and parts displayed as units may be or may not be physical units, may be located in one position, or may be distributed on multiple network elements. A part of or all of the modules may be selected according to the actual needs to achieve the objectives of the solutions of the embodiments. A person of ordinary skill in the art may understand and implement the embodiment without creative efforts.

In addition, the described apparatus and method and schematic diagrams of different embodiments may be combined or integrated with other systems, modules, technologies or methods without departing from the scope of this application. In addition, the displayed or discussed mutual couplings or direct couplings or communication connection may be implemented through some interfaces. The indirect couplings or communication connections between the apparatuses or units may be implemented in electronic, mechanic, or other forms.

The foregoing descriptions are merely specific implementations of this application, but are not intended to limit the protection scope of this application. The protection scope of this application shall be subject to the protection scope of the claims.

## Claims

1. An authentication method, wherein the method is performed by a storage system, and wherein the method comprises:
receiving a service request sent by a host, wherein the service request comprises a first account, and the first account is an account complying with a first protocol;
determining, by the storage system, a second account corresponding to the first account, wherein the second account is an account complying with a target protocol; and
authenticating the second account;
wherein the authenticating the second account comprises:
obtaining authorized account information of an access object of the service request, wherein the authorized account information indicates an authorized account that has permission to access the access object, and the authorized account is an account complying with the target protocol; and
authenticating the second account based on the authorized account information of the access object;
wherein the method further comprises:
creating the first account in response to a creation request sent by the host;
creating or determining the second account that has same access permission as the first account; and
when the first account is created recording a mapping relationship between the first account and the second account.

2. The method according to claim 1, wherein the creation request comprises permission information of the first account, and in a case of creating the second account, the method further comprises: setting permission information of the second account based on the permission information of the first account, wherein the permission information of the second account indicates access permission for data written by using the second account.

3. The method according to any one of claims 1 to 2, wherein before the determining a second account corresponding to the first account, the method further comprises:
determining, based on a format of the first account, that the first account is the account complying with the first protocol.

4. The method according to any one of claims 1 to 2, wherein before the determining a second account corresponding to the first account, the method further comprises:
determining, based on a format of an interface invoked by the service request, that the first account is the account complying with the first protocol.

5. The method according to claim 2, wherein the service request is a write request, the access object is storage space, and the authenticating the second account based on the authorized account information of the access object specifically comprises: when first authorized account information of the storage space comprises the second account, successfully authenticating the second account, and writing data comprised in the write request into the storage space.

6. The method according to claim 5, wherein the method further comprises: setting second authorized account information for the data based on the permission information of the second account.

7. An authentication apparatus, wherein the authentication apparatus comprises:
a receiving unit (61), configured to receive a service request sent by a host, wherein the service request comprises a first account, and the first account is an account complying with a first protocol;
a determining unit (62), configured to determine a second account corresponding to the first account, wherein the second account is an account complying with a target protocol; and
an authentication unit (63), configured to authenticate the second account;
wherein the authentication unit (63) is specifically configured to:
obtain authorized account information of an access object of the service request, wherein the authorized account information indicates an authorized account that has permission to access the access object, and the authorized account is an account complying with the target protocol; and
authenticate the second account based on the authorized account information of the access object;
wherein the authentication apparatus further comprises:
a first account creation unit, configured to create the first account in response to a creation request sent by the host;
a second account creation or determining unit, configured to create or determine the second account that has same access permission as the first account; and
a recording unit, configured to record a mapping relationship between the first account and the second account when the first account is created.

8. The authentication apparatus according to claim 7, wherein the creation request comprises permission information of the first account, and the authentication apparatus further comprises: a setting unit, configured to in a case of creating the second account, set permission information of the second account based on the permission information of the first account, wherein the permission information of the second account indicates access permission for data written by using the second account.

9. The authentication apparatus according to any one of claims 7 to 8, wherein the determining unit (62) is further configured to: before determining the second account corresponding to the first account, determine, based on a format of the first account, that the first account is the account complying with the first protocol.

10. The authentication apparatus according to any one of claims 7 to 8, wherein the determining unit (62) is further configured to: before determining the second account corresponding to the first account, determine, based on a format of an interface invoked by the service request, that the first account is the account complying with the first protocol.

11. The authentication apparatus according to claim 8, wherein the service request is a write request, the access object is storage space, and the authentication unit (63) is specifically configured to: when first authorized account information of the storage space comprises the second account, successfully authenticate the second account, and write data comprised in the write request into the storage space.

## Patentansprüche

1. Authentifizierungsverfahren, wobei das Verfahren durch ein Speichersystem durchgeführt wird und wobei das Verfahren umfasst:
Empfangen einer Dienstanfrage, die durch einen Host gesendet wird, wobei die Dienstanfrage ein erstes Konto umfasst und das erste Konto ein Konto, das ein erstes Protokoll einhält, ist;
Bestimmen, durch das Speichersystem, eines zweiten Kontos, das dem ersten Konto entspricht, wobei das zweite Konto ein Konto, das ein Zielprotokoll einhält, ist; und Authentifizieren des zweiten Kontos;
wobei das Authentifizieren des zweiten Kontos umfasst:
Erhalten von autorisierten Kontoinformationen eines Zugriffsobjekts der Dienstanfrage, wobei die autorisierten Kontoinformationen ein autorisiertes Konto, das eine Berechtigung aufweist, auf das Zugriffsobjekt zuzugreifen, angibt und das autorisierte Konto ein Konto, das das Zielprotokoll einhält, ist; und
Authentifizieren des zweiten Kontos basierend auf den autorisierten Kontoinformationen des Zugriffsobjekts;
wobei das Verfahren ferner umfasst:
Erstellen des ersten Kontos als Reaktion auf eine Erstellungsanfrage, die durch den Host gesendet wird;
Erstellen oder Bestimmen des zweiten Kontos, das eine gleiche Zugriffsberechtigung wie das erste Konto aufweist; und
wenn das erste Konto erstellt wird, Aufzeichnen einer Zuordnungsbeziehung zwischen dem ersten Konto und dem zweiten Konto.

2. Verfahren nach Anspruch 1, wobei die Erstellungsanfrage Berechtigungsinformationen des ersten Kontos umfasst und in einem Fall des Erstellens des zweiten Kontos, das Verfahren ferner umfasst: Einstellen der Berechtigungsinformationen des zweiten Kontos basierend auf den Berechtigungsinformationen des ersten Kontos, wobei die Berechtigungsinformationen des zweiten Kontos die Zugriffsberechtigung für Daten, die durch Verwenden des zweiten Kontos geschrieben werden, angibt.

3. Verfahren nach einem der Ansprüche 1 bis 2, wobei vor dem Bestimmen eines zweiten Kontos, das dem ersten Konto entspricht, das Verfahren ferner umfasst: Bestimmen, basierend auf einem Format des ersten Kontos, dass das erste Konto das Konto, das das erste Protokoll einhält, ist.

4. Verfahren nach einem der Ansprüche 1 bis 2, wobei vor dem Bestimmen eines zweiten Kontos, das dem ersten Konto entspricht, das Verfahren ferner umfasst: Bestimmen, basierend auf einem Format einer Schnittstelle, die durch die Dienstanfrage aufgerufen wird, dass das erste Konto das Konto, das das erste Protokoll einhält, ist.

5. Verfahren nach Anspruch 2, wobei die Dienstanfrage eine Schreibanfrage ist, das Zugriffsobjekt ein Speicherplatz ist und das Authentifizieren des zweiten Kontos basierend auf den autorisierten Kontoinformationen des Zugriffsobjekts speziell umfasst: wenn erste autorisierte Kontoinformationen des Speicherplatzes das zweite Konto umfassen, erfolgreiches Authentifizieren des zweiten Kontos und Schreiben der Daten, die in der Schreibanfrage umfasst sind, in den Speicherplatz.

6. Verfahren nach Anspruch 5, wobei das Verfahren ferner umfasst: Einstellen zweiter autorisierter Kontoinformationen für die Daten basierend auf den Berechtigungsinformationen des zweiten Kontos.

7. Authentifizierungseinrichtung, wobei die Authentifizierungseinrichtung umfasst:
eine Empfangseinheit (61), die konfiguriert ist, um eine Dienstanfrage, die durch einen Host gesendet wird, zu empfangen, wobei die Dienstanfrage ein erstes Konto umfasst und das erste Konto ein Konto, das ein erstes Protokoll einhält, ist;
eine Bestimmungseinheit (62), die konfiguriert ist, um ein zweites Konto zu bestimmen, das dem ersten Konto entspricht, wobei das zweite Konto ein Konto, das ein Zielprotokoll einhält, ist; und
eine Authentifizierungseinheit (63), die konfiguriert ist, um das zweite Konto zu authentifizieren;
wobei die Authentifizierungseinheit (63) speziell konfiguriert ist zum:
Erhalten der autorisierten Kontoinformationen eines Zugriffsobjekts der Dienstanfrage, wobei die autorisierten Kontoinformationen ein autorisiertes Konto, das die Berechtigung aufweist, auf das Zugriffsobjekt zuzugreifen, angibt und das autorisierte Konto ein Konto, das das Zielprotokoll einhält, ist; und
Authentifizieren des zweiten Kontos basierend auf den autorisierten Kontoinformationen des Zugriffsobjekts;
wobei die Authentifizierungseinrichtung ferner umfasst:
eine erste Kontoerstellungseinheit, die konfiguriert ist, um das erste Konto als Reaktion auf eine Erstellungsanfrage, die durch den Host gesendet wird, zu erstellen;
eine zweite Kontoerstellungs- oder Bestimmungseinheit, die konfiguriert ist, um das zweite Konto, das die gleiche Zugriffsberechtigung wie das erste Konto aufweist, zu erstellen oder zu bestimmen; und
eine Aufzeichnungseinheit, die konfiguriert ist, um eine Zuordnungsbeziehung zwischen dem ersten Konto und dem zweiten Konto aufzuzeichnen, wenn das erste Konto erstellt wird.

8. Authentifizierungseinrichtung nach Anspruch 7, wobei die Erstellungsanfrage Berechtigungsinformationen des ersten Kontos umfasst und die Authentifizierungseinrichtung ferner umfasst: eine Einstellungseinheit, die konfiguriert ist zum:
in einem Fall des Erstellens des zweiten Kontos, Einstellen der Berechtigungsinformationen des zweiten Kontos basierend auf den Berechtigungsinformationen des ersten Kontos, wobei die Berechtigungsinformationen des zweiten Kontos die Zugriffsberechtigung für Daten, die durch Verwenden des zweiten Kontos geschrieben werden, angibt.

9. Authentifizierungseinrichtung nach einem der Ansprüche 7 bis 8, wobei die Bestimmungseinheit (62) ferner konfiguriert ist zum: vor dem Bestimmen des zweiten Kontos, das dem ersten Konto entspricht, Bestimmen, basierend auf einem Format des ersten Kontos, dass das erste Konto das Konto, das das erste Protokoll einhält, ist.

10. Authentifizierungseinrichtung nach einem der Ansprüche 7 bis 8, wobei die Bestimmungseinheit (62) ferner konfiguriert ist zum: vor dem Bestimmen des zweiten Kontos, das dem ersten Konto entspricht, Bestimmen, basierend auf einem Format einer Schnittstelle, die durch die Dienstanfrage aufgerufen wird, dass das erste Konto das Konto, das das erste Protokoll einhält, ist.

11. Authentifizierungseinrichtung nach Anspruch 8, wobei die Dienstanfrage eine Schreibanfrage ist, das Zugriffsobjekt der Speicherplatz ist und die Authentifizierungseinheit (63) speziell konfiguriert ist zum: wenn erste autorisierte Kontoinformationen des Speicherplatzes das zweite Konto umfassen, erfolgreiches Authentifizieren des zweiten Kontos und Schreiben der Daten, die in der Schreibanfrage umfasst sind, in den Speicherplatz.

## Revendications

1. Procédé d'authentification, dans lequel le procédé est réalisé par un système de stockage, et dans lequel le procédé comprend :
la réception d'une demande de service envoyée par un hôte, dans lequel la demande de service comprend un premier compte, et le premier compte est un compte conforme à un premier protocole ;
la détermination, par le système de stockage, d'un second compte correspondant au premier compte, dans lequel le second compte est un compte conforme à un protocole cible ; et
l'authentification du second compte ;
dans lequel l'authentification du second compte comprend :
l'obtention d'informations de compte autorisé d'un objet d'accès de la demande de service, dans lequel les informations de compte autorisé indiquent un compte autorisé qui a la permission d'accéder à l'objet d'accès, et le compte autorisé est un compte conforme au protocole cible ; et
l'authentification du second compte en fonction des informations de compte autorisé de l'objet d'accès ;
dans lequel le procédé comprend en outre :
la création du premier compte en réponse à une demande de création envoyée par l'hôte ;
la création ou la détermination du second compte qui a une même permission d'accès que le premier compte ; et
lors de la création du premier compte, l'enregistrement d'une relation de mise en correspondance entre le premier compte et le second compte.

2. Procédé selon la revendication 1, dans lequel la demande de création comprend des informations de permission du premier compte, et dans un cas de création du second compte, le procédé comprend en outre : la définition d'informations de permission du second compte en fonction des informations de permission du premier compte, dans lequel les informations de permission du second compte indiquent une permission d'accès pour des données écrites en utilisant le second compte.

3. Procédé selon l'une quelconque des revendications 1 à 2, dans lequel, avant la détermination d'un second compte correspondant au premier compte, le procédé comprend en outre :
le fait de déterminer, en fonction d'un format du premier compte, que le premier compte est le compte conforme au premier protocole.

4. Procédé selon l'une quelconque des revendications 1 à 2, dans lequel, avant la détermination d'un second compte correspondant au premier compte, le procédé comprend en outre :
le fait de déterminer, en fonction d'un format d'une interface appelée par la demande de service, que le premier compte est le compte conforme au premier protocole.

5. Procédé selon la revendication 2, dans lequel la demande de service est une demande d'écriture, l'objet d'accès est un espace de stockage, et l'authentification du second compte en fonction des informations de compte autorisé de l'objet d'accès comprend spécifiquement : lorsque de premières informations de compte autorisé de l'espace de stockage comprennent le second compte, l'authentification réussie du second compte, et l'écriture de données comprises dans la demande d'écriture dans l'espace de stockage.

6. Procédé selon la revendication 5, dans lequel le procédé comprend en outre : la définition de secondes informations de compte autorisé pour les données en fonction des informations de permission du second compte.

7. Appareil d'authentification, dans lequel l'appareil d'authentification comprend :
une unité de réception (61), configurée pour recevoir une demande de service envoyée par un hôte, dans lequel la demande de service comprend un premier compte, et le premier compte est un compte conforme à un premier protocole ;
une unité de détermination (62), configurée pour déterminer un second compte correspondant au premier compte, dans lequel le second compte est un compte conforme à un protocole cible ; et
une unité d'authentification (63), configurée pour authentifier le second compte ;
dans lequel l'unité d'authentification (63) est spécifiquement configurée pour :
obtenir des informations de compte autorisé d'un objet d'accès de la demande de service, dans lequel les informations de compte autorisé indiquent un compte autorisé qui a la permission d'accéder à l'objet d'accès, et le compte autorisé est un compte conforme au protocole cible ; et
authentifier le second compte en fonction des informations de compte autorisé de l'objet d'accès ;
dans lequel l'appareil d'authentification comprend en outre :
une première unité de création de compte, configurée pour créer le premier compte en réponse à une demande de création envoyée par l'hôte ;
une seconde unité de création ou de détermination de compte, configurée pour créer ou déterminer que le second compte a une même permission d'accès que le premier compte ; et
une unité d'enregistrement, configurée pour enregistrer une relation de mise en correspondance entre le premier compte et le second compte lorsque le premier compte est créé.

8. Appareil d'authentification
selon la revendication 7, dans lequel la demande de création comprend des informations de permission du premier compte, et l'appareil d'authentification comprend en outre : une unité de définition, configurée pour :
dans un cas de création du second compte, définir des informations de permission du second compte en fonction des informations de permission du premier compte, dans lequel les informations de permission du second compte indiquent une permission d'accès pour des données écrites en utilisant le second compte.

9. Appareil d'authentification selon l'une quelconque des revendications 7 à 8, dans lequel l'unité de détermination (62) est en outre configurée pour : avant la détermination du second compte correspondant au premier compte, déterminer, en fonction d'un format du premier compte, que le premier compte est le compte conforme au premier protocole.

10. Appareil d'authentification selon l'une quelconque des revendications 7 à 8, dans lequel l'unité de détermination (62) est en outre configurée pour : avant la détermination du second compte correspondant au premier compte, déterminer, en fonction d'un format d'une interface appelée par la demande de service, que le premier compte est le compte conforme au premier protocole.

11. Appareil d'authentification selon la revendication 8, dans lequel la demande de service est une demande d'écriture, l'objet d'accès est un espace de stockage, et l'unité d'authentification (63) est spécifiquement configurée pour : lorsque de premières informations de compte autorisé de l'espace de stockage comprennent le second compte, authentifier avec succès le second compte, et écrire des données comprises dans la demande d'écriture dans l'espace de stockage.
